# EUROPEAN PATENT APPLICATION

(11) **EP 4 712 237 A1**
(43) Date of publication of application: **18.03.2026**
(21) Application number: 24844622.1
(22) Date of filing: 10.07.2024
(51) Int. Cl.: H01M 50/258, H01M 50/247, H01M 10/46, H01M 50/503, H02J 7/00

(54) **POWER TOOL AND BATTERY PACK**

(30) Priority: 26.07.2023 CN 202310930017; 28.06.2024 CN 202410865070; 28.06.2024 CN 202410868943; 28.06.2024 CN 202410873073; 28.06.2024 CN 202410869167
(71) Applicant: Nanjing Chervon Industry Co., Ltd., Nanjing, Jiangsu 211106 (CN)
(72) Inventor: YUAN, Yongjie, Nanjing, Jiangsu 211106 (CN); DONG, Zhijun, Nanjing, Jiangsu 211106 (CN); HE, Xiaolei, Nanjing, Jiangsu 211106 (CN); YANG, Dezhong, Nanjing, Jiangsu 211106 (CN)
(74) Representative: Sun, Yiming
(86) International application number: PCT/CN2024/104715
(87) International publication number: WO 2025/020929

(57) **Abstract**

Provided are a power tool and a battery pack. The battery pack includes: a housing; a power tool interface configured to be connected to the power tool, where the power tool interface includes a terminal assembly; and a cell module accommodated in the housing and electrically connected to the terminal assembly, where the cell module includes at least multiple cell units. The continuous discharge power of the cell unit is greater than or equal to 300 W.

## Description

This application claims priority to Chinese Patent Application No. 202310930017.6 filed with the China National Intellectual Property Administration (CNIPA) on Jul. 26, 2023, Chinese Patent Application No. 202410865070.7 filed with the CNIPA on Jun. 28, 2024, Chinese Patent Application No. 202410868943.X filed with CNIPA on Jun. 28, 2024, Chinese Patent Application No. 202410873073.5 filed with CNIPA on Jun. 28, 2024, and Chinese Patent Application No. 202410869167.5 filed with CNIPA on Jun. 28, 2024, the disclosures of which are incorporated herein by reference in their entireties.

### TECHNICAL FIELD

The present application relates to the technical field of power tools, for example, a power tool and a battery pack.

### BACKGROUND

With the development of battery technology, engine tools are gradually replaced with power tools. In order that a cordless power tool has a better use effect, a battery pack is required to have higher output characteristics. For example, a garden tool requires a battery pack with a longer battery life, a handheld power tool requires a battery pack with a higher energy density, and various types of power tools require battery packs with higher continuous discharge power.

This part provides background information related to the present application, and the background information is not necessarily the existing art.

### SUMMARY

An object of the present application is to solve or at least alleviate part or all of the preceding problems. Therefore, an object of the present application is to provide a battery pack with better output performance and a power tool using the battery pack.

To achieve the preceding object, the present application adopts the technical solutions below.

A battery pack for supplying power to a power tool includes: a housing; a power tool interface configured to be connected to the power tool, where the power tool interface includes a terminal assembly; and a cell module accommodated in the housing and electrically connected to the terminal assembly, where the cell module includes at least multiple cell units. The continuous discharge power of the cell unit is greater than or equal to 300 W.

In some examples, the instantaneous discharge power of the cell unit is greater than or equal to 550 W.

In some examples, the power density of the battery pack is greater than or equal to 1500 W/kg.

In some examples, the cell units are full-tab batteries.

In some examples, the terminal assembly includes a first positive terminal, a second positive terminal, a negative terminal, and a communication terminal.

In some examples, the battery pack is further configured to be detachably mounted to a riding vehicle to supply power to the riding vehicle.

In some examples, the battery pack is further configured to be detachably mounted to a mobile power supply to supply power to at least the mobile power supply.

In some examples, the minimum distance between every two adjacent cell units in the multiple cell units is greater than or equal to 2 mm.

A battery pack for supplying power to a power tool includes: a housing; a power tool interface configured to be connected to the power tool, where the power tool interface includes a terminal assembly; and a cell module accommodated in the housing and electrically connected to the terminal assembly, where the cell module includes at least one cell unit. The maximum discharge rate of the battery pack is greater than or equal to 20 C and less than or equal to 50 C.

In some examples, the at least one cell unit is a full-tab battery.

In some examples, the resistance of the at least one cell unit is less than or equal to 10 mΩ.

In some examples, the energy density of the at least one cell unit is greater than or equal to 600 Wh/L.

In some examples, the charge rate of the battery pack is greater than or equal to 4 C and less than or equal to 10 C.

A battery pack includes: a housing; an interface configured to be connected to an electrical device, where the interface includes a terminal assembly; and a cell module accommodated in the housing and electrically connected to the terminal assembly, where the cell module includes multiple cell units. When the remaining power of the battery pack is greater than or equal to 50% and the battery pack supplies power to the electrical device at a discharge rate of greater than or equal to 2 C at a preset temperature, the voltage drop of a cell unit of the multiple cell units is less than or equal to 100 mV.

In some examples, the cell units are cylindrical batteries.

In some examples, the cell units are full-tab batteries.

In some examples, the power density of the battery pack is greater than or equal to 1500 W/kg.

In some examples, the preset temperature ranges from -20 °C to 60 °C.

A handheld power tool includes: a housing; a working piece; an electric motor disposed in the housing and configured to drive the working piece; and a battery pack detachably mounted to the housing and configured to supply power to the electric motor. The weight of the battery pack is less than or equal to 4 kg, and the battery pack is capable of continuously providing the electric motor with a power of greater than or equal to 6 kW.

In some examples, the battery pack includes multiple cell units, and at least one cell unit of the multiple cell units is a full-tab battery.

In some examples, the handheld power tool is a garden tool.

In some examples, the handheld power tool is a chainsaw.

In some examples, the cell units are cylindrical batteries.

In some examples, the resistance of the at least one cell unit is less than or equal to 10 mΩ.

A battery pack includes: a housing; an interface configured to be detachably connected to an electrical device or a charging device, where the interface includes a terminal assembly; and a cell module accommodated in the housing and electrically connected to the terminal assembly, where the cell module includes multiple cylindrical cell units. When the interface is electrically connected to the charging device and the battery level of the battery pack is less than or equal to a first threshold, the charge rate of the battery pack is greater than or equal to 4 C and less than or equal to 10 C.

In some examples, the electrical device includes a riding mower.

In some examples, the electrical device or the charging device includes a mobile power supply.

In some examples, the continuous discharge power of the cell unit is greater than or equal to 300 W.

In some examples, the power density of the battery pack is greater than or equal to 1500 W/kg.

In some examples, the first threshold is greater than or equal to 70% and less than or equal to 90%.

In some examples, the battery pack includes at least ten cell units, and the at least ten cell units are full-tab batteries.

In some examples, the cell units are full-tab batteries.

In some examples, the interface is configured to be connectable to an adapter, and the adapter is connectable to alternating current power or direct current power as a charging power supply.

A battery pack includes: a housing; and a cell module accommodated in the housing, where the cell module includes multiple cell units, and the multiple cell units include at least one full-tab battery. The battery pack further includes: a first interface configured to be connected to at least an electrical device, where the first interface includes a first terminal assembly; and a second interface configured to be connected to at least a charging device, where the second interface includes a second terminal assembly. At least some components of the first terminal assembly and the second terminal assembly are different.

In some examples, the cell units are cylindrical batteries.

In some examples, the electrical device includes a garden tool or a handheld tool.

In some examples, the charging device includes a charger or an adapter.

In some examples, the resistance of the at least one cell unit is less than or equal to 10 mΩ.

In some examples, the energy density of the at least one cell unit is greater than or equal to 600 Wh/L.

In some examples, the charge rate of the battery pack is greater than or equal to 3 C and less than or equal to 10 C.

In some examples, the first terminal assembly includes a first positive terminal, a negative terminal, and a communication terminal; and the second terminal assembly includes a second positive terminal, the negative terminal, and the communication terminal.

A battery pack includes: a housing; a terminal assembly disposed in the housing; and multiple cell units disposed in the housing, where each of the multiple cell units includes a positive electrode tab and a negative electrode tab. The positive electrode tab or the negative electrode tab has a full-tab structure. Heat dissipation structures are further disposed in the housing, and the minimum distance between the positive electrode tab or the negative electrode tab and the heat dissipation structure in the axial direction of the cell unit is less than or equal to 1 cm.

In some examples, the heat dissipation structure includes a busbar.

In some examples, the heat dissipation structure includes at least one heat dissipation material selected from a nickel strip, copper, and nickel-plated copper.

In some examples, the heat dissipation structure includes a heat dissipation channel, and an inlet of the heat dissipation channel faces at least one end surface of the cell unit.

In some examples, the heat dissipation structure includes a hydrogel.

A power tool includes: a housing; a working piece; an electric motor disposed in the housing and configured to drive the working piece; and an energy storage device configured to be capable of supplying power to the electric motor and including multiple cell units. The energy storage device is configured to be capable of receiving and storing the regenerative current, where the maximum regenerative current of each of the multiple cell units is greater than or equal to 10 A.

In some examples, the cell units are full-tab batteries.

In some examples, the internal resistance of the cell unit is less than or equal to 10 mΩ.

In some examples, the energy storage device is disposed inside the housing.

In some examples, the energy storage device is detachably mounted on the outer side of the housing.

A power tool includes: a housing; a working piece; an electric motor disposed in the housing and configured to drive the working piece; a battery pack interface disposed on the housing and used for detachably mounting a battery pack, where the battery pack interface transmits electrical energy from the battery pack to supply power to the electric motor; a driver circuit configured to drive the electric motor to rotate; and a controller configured to control the driver circuit. The controller is further configured to: when identifying that the battery pack interface is connected to a first battery pack, set an overcurrent protection threshold of the power tool to a first threshold; and when identifying that the battery pack interface is connected to a second battery pack, set the overcurrent protection threshold of the power tool to a second threshold. The first threshold is greater than or equal to twice the second threshold, and the volumes of the first battery pack and the second battery pack are the same within a preset volume floating range.

In some examples, the first battery pack includes multiple cell units, and the multiple cell units are full-tab batteries.

In some examples, the controller is further configured to: when identifying that the battery pack interface is connected to the first battery pack, set the overcurrent protection response time to the first duration; and when identifying that the battery pack interface is connected to the second battery pack, set the overcurrent protection response time to the second duration; where the first duration is greater than the second duration.

In some examples, the number of cell units in the first battery pack is basically the same as the number of cell units in the second battery pack.

A battery pack includes a housing; a terminal assembly disposed in the housing; and a cell module accommodated in the housing and electrically connected to the terminal assembly, where the cell module includes multiple cylindrical cell units. At least one of the multiple cylindrical cell units is a test cell. A temperature detection element is disposed at an end of the test cell and configured to detect the temperature of a tab of the test cell.

In some examples, the test cell is located basically at the center of gravity of the cell module.

In some examples, the battery pack further includes a battery management unit, where the battery management unit communicates with the temperature detection element via a communication line.

In some examples, the test cell is a full-tab battery.

In some examples, the temperature detection element includes at least a temperature sensor.

A battery pack includes: a housing; a terminal assembly disposed in the housing; a cell module accommodated in the housing and electrically connected to the terminal assembly, where the cell module includes multiple cell units, and the multiple cell units include at least one full-tab battery; a temperature detection element configured to acquire the temperature of the full-tab battery; and a battery management unit disposed in the housing and communicatively connected to the temperature detection element. The battery management unit is configured to adjust the maximum output power or the maximum output current of the battery pack according to the temperature.

In some examples, the temperature detection element is configured to directly detect the temperature of the full-tab battery.

In some examples, the temperature detection element is configured to detect the ambient temperature within the battery pack and estimate the temperature of the full-tab battery according to the ambient temperature.

In some examples, the battery management unit is further configured to select a charging mode of the battery pack according to the temperature.

In some examples, the battery pack is suitable for supplying power to a riding vehicle.

In some examples, the battery pack is suitable for supplying power to a power tool.

A power tool includes: a housing; a working piece; an electric motor disposed in the housing and configured to drive the working piece; an energy storage device mounted to the housing, where the energy storage device includes multiple cell units for supplying power to the electric motor; and a driver circuit disposed in the housing and configured to drive the electric motor, where the driver circuit includes multiple semiconductor switches. The multiple cell units are full-tab batteries, and the resistance of the semiconductor switch is less than or equal to 2 mΩ.

In some examples, the electric motor includes a stator core and windings, and the slot fill factor of the windings is greater than or equal to 40%.

In some examples, the electric motor is a flat wire motor.

In some examples, the semiconductor switch includes gallium nitride.

In some examples, the power of the electric motor is greater than or equal to 0 and less than or equal to 10 kW.

In some examples, the energy storage device is disposed inside the housing.

In some examples, the energy storage device is detachably mounted on the outer side of the housing.

A battery pack for supplying power to a power tool includes: a housing; a power tool interface configured to be connected to the power tool, where the power tool interface includes a terminal assembly; a cell module accommodated in the housing and electrically connected to the terminal assembly, where the cell module includes multiple cell units, and the multiple cell units include at least one full-tab battery; and a magnetic current sensor configured to detect the current of the cell module, where the magnetic current sensor is disposed in the housing.

In some examples, the terminal assembly includes a first positive terminal, a second positive terminal, a negative terminal, and a communication terminal.

In some examples, the battery pack further includes cell connection pieces for connecting the multiple cell units, where the cell connection piece has an uneven thickness.

In some examples, the thickness of a welded portion of the cell connection piece is less than the thickness of a non-welded portion of the cell connection piece.

In some examples, the magnetic current sensor is disposed on a charging/discharging circuit of the cell module.

A battery pack for supplying power to a power tool includes: a housing; a power tool interface for connecting the power tool; a cell module accommodated in the housing, where the cell module includes multiple cell units; and cell connection pieces for connecting at least two of the multiple cell units. In the case where the battery pack continuously supplies power to the power tool at a current of 100 A for at least 30s, the temperature rise of the cell connection pieces is less than or equal to 120°C.

In an example, a reinforcement member is disposed on a non-welding surface of the cell connection piece.

In an example, the reinforcement member includes a metal sheet or a metal coating.

In an example, the reinforcement member includes a copper sheet or a copper coating.

In an example, the thickness of the reinforcement member is greater than or equal to 0.1 mm and less than or equal to 2 mm.

In an example, the thickness of the reinforcement member is greater than or equal to 0.2 mm and less than or equal to 1 mm.

In an example, the number of welding points between the cell connection piece and the cell unit is greater than or equal to 4 and less than or equal to 8.

In an example, the surface shape of the reinforcement member is different from the surface shape of the cell connection piece.

In an example, the surface shape of the reinforcement member is consistent with the surface shape of the cell connection piece.

In an example, the reinforcement member is disposed on the cell connection piece by at least one of welding, rolling, or composite processes.

In an example, the reinforcement member is made of a material different from that of the cell connection piece.

A battery pack includes: a housing; a cell module accommodated in the housing, where the cell module includes multiple cell units; and cell connection pieces for connecting at least two of the multiple cell units. The contact impedance between the cell connection piece and the cell unit is less than or equal to 10 µΩ.

In an example, a reinforcement member is disposed on a non-welding surface of the cell connection piece.

### BRIEF DESCRIPTION OF DRAWINGS

To illustrate technical solutions in examples of the present application more clearly, the drawings used in the description of the examples are briefly described below. Apparently, the drawings described below illustrate only part of the examples of the present application, and those of ordinary skill in the art may obtain other drawings based on the drawings described below on the premise that no creative work is done.
FIG. 1 is a perspective view of a battery pack according to an example of the present application.
FIG. 2A is an exploded view of a battery pack according to an example of the present application.
FIG. 2B is a schematic view of a partial structure of a battery pack according to an example of the present application.
FIG. 2C is a structural view of a cell connection piece according to an example of the present application.
FIG. 2D is a structural view of a cell connection piece according to an example of the present application.
FIG. 3 is a schematic diagram illustrating that a battery pack terminal has separate charging and discharging ports according to an example of the present application.
FIG. 4 is an example view of power tools to which a battery pack is applicable according to an example of the present application.
FIG. 5 is an example view of a power supply device to which a battery pack is applicable according to an example of the present application.
FIG. 6 is a structural view of a cell unit according to an example of the present application.
FIG. 7 is a schematic view of tabs in an existing cell unit according to an example of the present application.
FIG. 8 is a schematic view of a full-tab cell unit according to an example of the present application.
FIG. 9 is a schematic diagram illustrating voltage changes of a cell unit during a discharging process of a battery pack according to an example of the present application.
FIG. 10 is an example view of test cells in a battery pack according to an example of the present application.
FIG. 11 is a control circuit diagram of a power tool using a battery pack according to an example of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

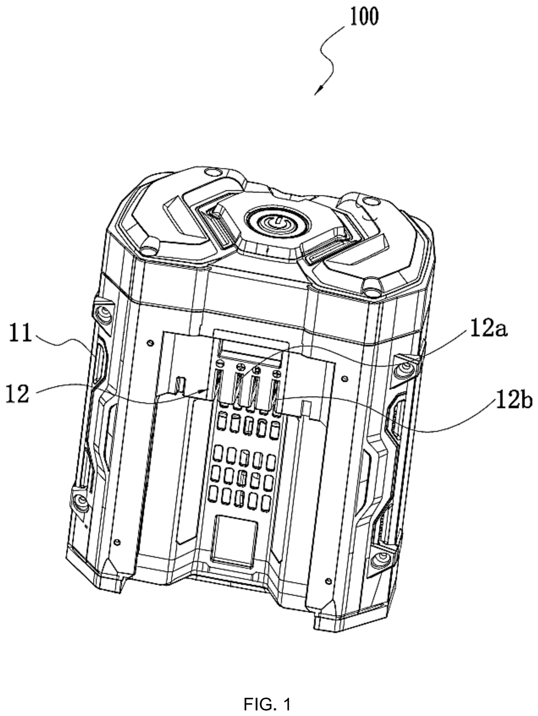

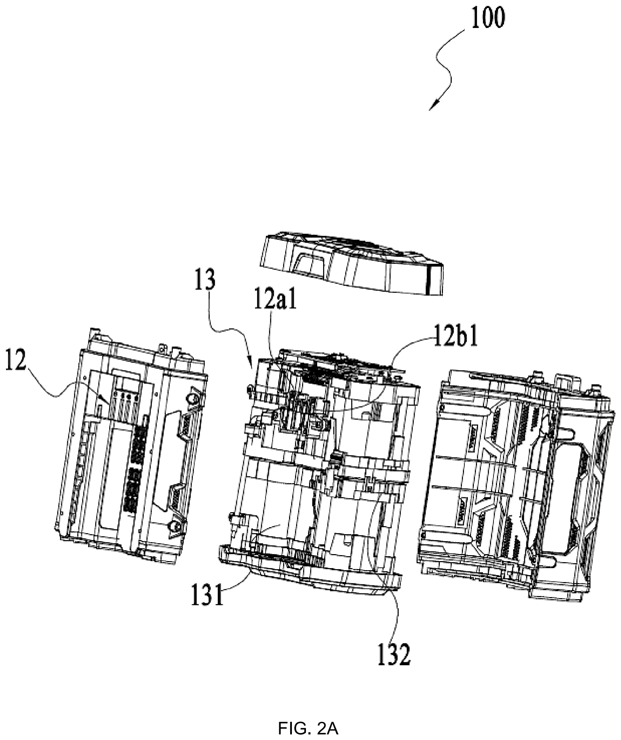

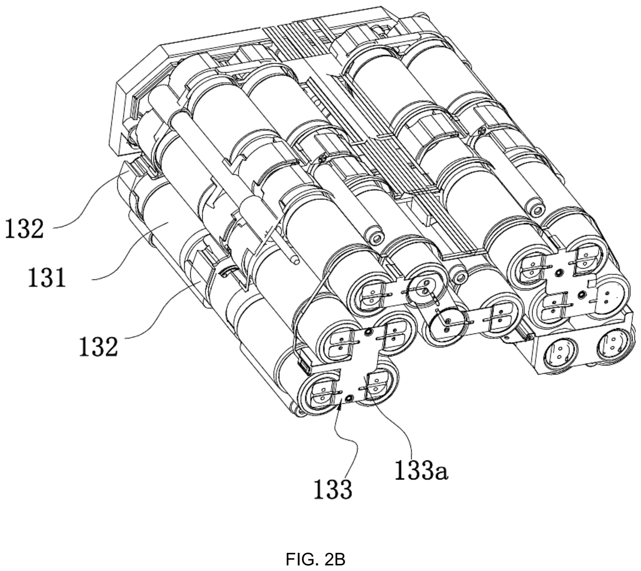

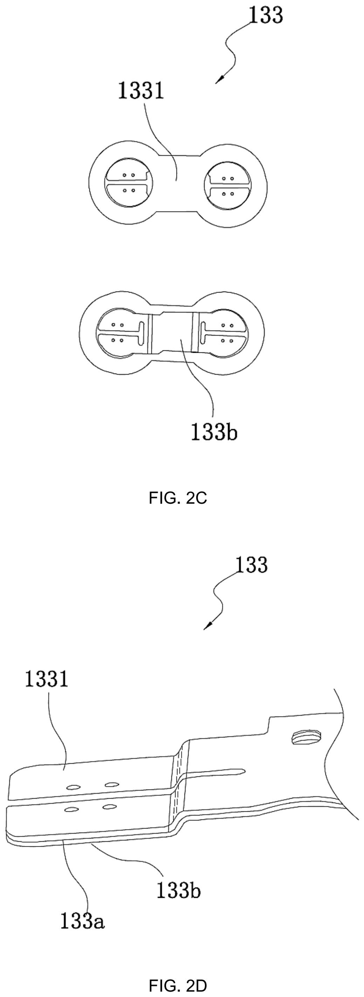

Referring to a battery pack 100 shown in FIGS. 1 and 2, the battery pack 100 mainly includes a housing 11, an interface 12, and a cell module 13. In the present application, the interface 12 may also be referred to as a power tool interface, which is mainly used for connecting a power tool. The interface and the power tool interface may be interchangeable below. The power tool interface 12 includes a terminal assembly 121.

The terminal assembly 121 can at least transmit electrical energy between the battery pack 100 and the power tool. In other examples, the terminal assembly 121 may transmit electrical energy between the battery pack 100 and a charger or adapter or may transmit electrical energy between the battery pack 100 and other electrical devices. In an example, the terminal assembly 121 may include a positive terminal, a negative terminal, and a communication terminal or may include at least a positive terminal and a negative terminal. The cell module 13 is disposed in the housing 11 and can be directly or indirectly electrically connected to the terminal assembly 121. As shown in FIGS. 2A to 2D, the cell module 13 may include multiple cell units 131, cell holders 132 for supporting the cell units 131, and cell connection pieces 133 for electrically connecting the multiple cell units 131.

In this example, the interface 12 may include a first interface 12a and a second interface 12b. The first interface 12a and the second interface 12b may be two completely independent interfaces or may share part of the terminal assembly. In an example, the first interface 12a may include a first terminal assembly 12a1, the second interface 12b may include a second terminal assembly 12b1, and at least some components of the first terminal assembly 12a1 and the second terminal assembly 12b1 are the same or different. For example, the first terminal assembly 12a1 includes a first positive terminal, a negative terminal, and a communication terminal, and the second terminal assembly 12b1 includes a second positive terminal, the negative terminal, and the communication terminal, that is, the first terminal assembly 12a1 and the second terminal assembly 12b1 share the negative terminal and the communication terminal, but have different positive terminals.

In an example, the first interface 12a and the second interface 12b may both be used as charging interfaces. For example, the first interface 12a and the second interface 12b may both be connected to a charger, a mobile power supply, or an adapter to charge the battery pack 100 by using alternating current power or another battery pack as a charging power supply. In an example, the first interface 12a and the second interface 12b may both be discharging interfaces. In an optional example, the output voltages or output powers of the two interfaces may be different or the same.

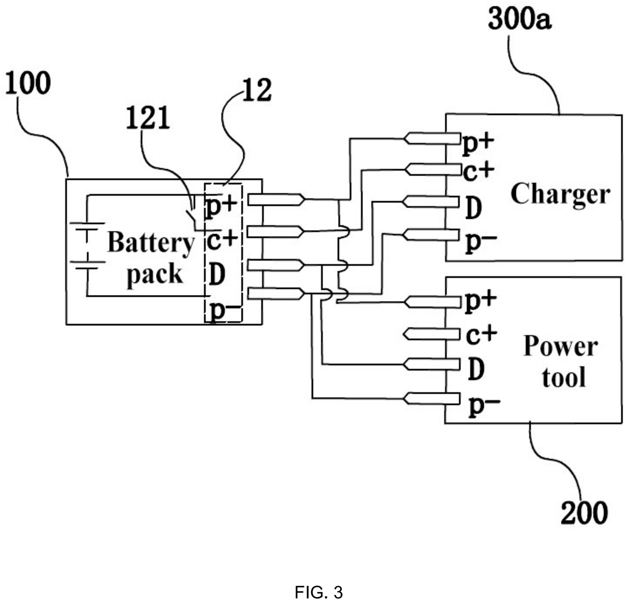

In an example, the first interface 12a may be used for connecting electrical devices, such as various power tools or other direct current devices, while the second interface 12b may be used for connecting charging devices, such as chargers or mobile power supplies. In other words, the battery pack 100 has separate charging and discharging ports. As shown in FIG. 3, the battery pack 100 may be connected to a power tool 200 or a charger 300a through the interface 12. A selection switch 121 in the battery pack 100 can control the interface 12 to be the first interface 12a or the second interface 12b according to different electrical devices connected to the interface 12. In this example, the first interface 12a can be connected to the charger 300a. When the selection switch 121 is turned on, positive terminals p+ and c+, a negative terminal p-, and a communication terminal D constitute the first interface 12a. The second interface 12b can be connected to the power tool 200. When the selection switch 121 is turned off, the positive terminal p+, the negative terminal p-, and the communication terminal D constitute the second interface 12b.

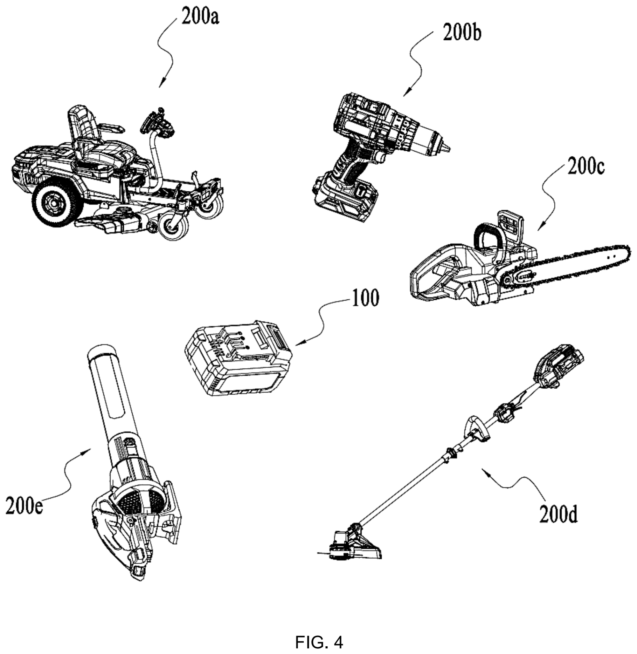

In this example, various types of power tools 200 can be powered by the battery pack 100. FIG. 4 illustrates several common power tools, for example, a riding mower 200a, an electric drill 200b, a chainsaw 200c, a string trimmer 200d, and a blower 200e. It is to be noted that the power tool 200 may be a handheld power tool, such as a drill, a hedge trimmer, or a sander. Alternatively, the power tool 200 may be a table tool, such as a table saw or a miter saw. Alternatively, the power tool 200 may be a push power tool, such as a push mower or a push snow thrower. Alternatively, the power tool 200 may be a riding power tool, such as a riding mower, a riding vehicle, or an all-terrain vehicle. Alternatively, the power tool 200 may be a robotic tool, such as a robotic mower or a robotic snow thrower. In some examples, the power tool 200 may be an electric drill, an electric lamp, an electric vehicle, or the like. In some examples, the power tool 200 may be a garden tool, such as a hedge trimmer, a blower, a mower, or a chainsaw. Alternatively, the power tool 200 may be a decorating tool, such as a screwdriver, a nail gun, a circular saw, or a sander. In some examples, the power tool 200 may be a vegetation care tool, such as a string trimmer, a mower, a hedge trimmer, or a chainsaw. Alternatively, the power tool 200 may be a cleaning tool, such as a blower, a snow thrower, or a cleaning machine. Alternatively, the power tool 200 may be a drilling tool, such as a drill, a screwdriver, a wrench, or an electric hammer. Alternatively, the power tool 200 may be a sawing tool such as a reciprocating saw, a jigsaw, or a circular saw. Alternatively, the power tool 200 may be a table tool, such as a table saw, a miter saw, a metal cutter, or an electric router. Alternatively, the power tool 200 may be a sanding tool, such as an angle grinder or a sander. Alternatively, the power tool 200 may be another tool, such as a lamp or a fan.

The power tool 200 powered by the battery pack 100 may have a battery pack mounting portion for mounting the battery pack 100. In an example, the battery pack 100 is detachably mounted to a housing 201 of the power tool 200. In an example, the battery pack 100 is fixedly mounted in an accommodation cavity formed by the housing 201, that is, the battery pack 100 is built into the power tool 200.

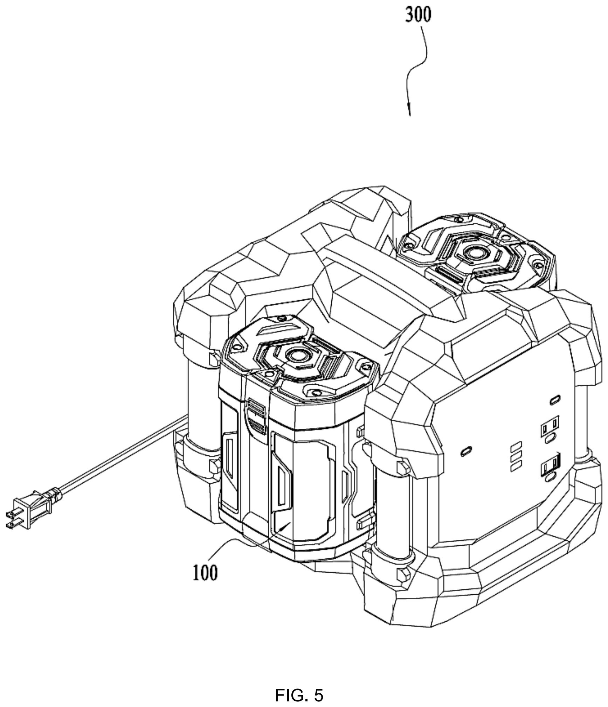

The battery pack 100 may be connected to a mobile power supply 300 shown in FIG. 5. The mobile power supply 300 may be used as a small mobile power station and may be connected to the electrical grid, a charging pile for a vehicle, or a photovoltaic charging panel to acquire charging electrical energy. The mobile power supply 300 may be provided with an energy storage device such as a battery pack or a capacitor. The mobile power supply 300 may have a direct current output interface or an alternating current output interface and can output direct current power supply energy or alternating current power supply energy.

In this example, the mobile power supply 300 can be detachably connected to the battery pack 100. The mobile power supply 300 can charge the connected battery pack 100, and the electrical energy of the battery pack 100 can charge the energy storage device in the mobile power supply 300. That is, the battery pack 100 can supply power to the mobile power supply 300 and can also acquire electrical energy from the mobile power supply 300. In an example, the battery pack 100 can be connected to the housing of the mobile power supply 300 or connected to a closed or semi-closed accommodation cavity formed by the housing of the mobile power supply 300. The structure of the mobile power supply 300 serving as the mobile power station is not specifically limited in this example.

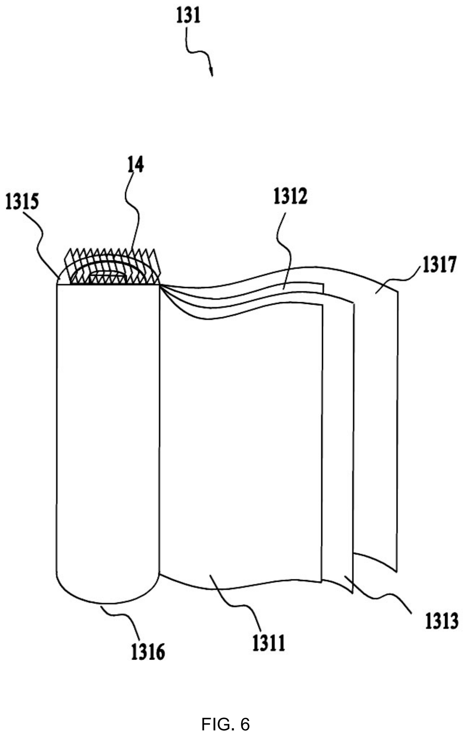

The battery pack 100 is an energy storage element, and the cell units 131 in the battery pack 100 may be referred to as core components. The structure or composition of the cell unit 131 directly affects the output characteristics of the battery pack 100. In this example, the cell unit 131 may be a cylindrical battery as shown in FIG. 6 and may include an anode 1311, a cathode 1312, an electrolyte 1313, and a cylindrical housing 1317. In an example, the anode 1311 and the cathode 1312 are longitudinally wound together to form a single cell. For the winding configuration, the electrolyte 1313 is disposed between the opposing surfaces of the anode 1311 and the cathode 1312. In an example, the electrolyte 1313 may be an organic solvent, a solid electrolyte, a lithium-ion liquid electrolyte, or a polymer electrolyte. The anode 1311 and the cathode 1312 may be made of suitable materials. For example, the cathode and the anode may include sheets or plates coated with or made of lithium oxide alloys or lithium compounds. In an example, the anode 1311 and the cathode 1312 may include sheets or plates of graphite, graphene, silicon, silicon oxide, or the like.

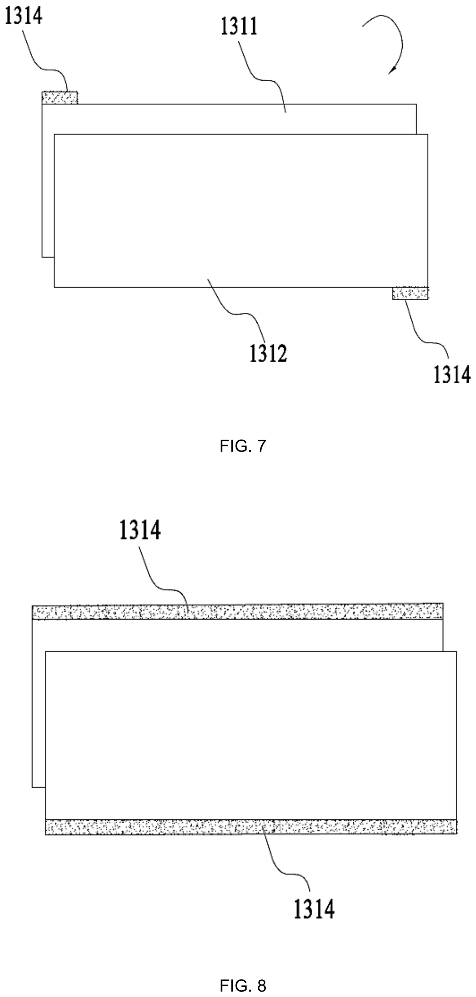

To conduct electrical energy out of the cell unit 131, the cell unit 131 further includes tabs 1314 that are connected to the anode 1311 and the cathode 1312 and can conduct electricity out of the cell unit 131. As shown in FIG. 7, for a single-tab battery, the tab 1314 may be provided as an electrode material extending along the longitudinal edge of the cell unit 131. For example, a protrusion or a grooved or toothed design of a conductive sheet extending beyond the coating material of the anode 1311 or the cathode 1312 may be configured to be the tab 1314.

The structure of the cell unit 131 shown in FIG. 7 can be wound along the winding direction indicated by the arrow to form a single cell. After winding, electrical energy is transmitted between two ends of the cell unit 131 through the tabs 1314. As shown in FIGS 6 and 7, the cell unit 131 may further include a positive terminal cap 1315 and a negative terminal cap 1316, the positive terminal cap 1315 is electrically connected to the tab 1314 of the anode 1311, and the negative terminal cap 1316 is electrically connected to the tab 1314 of the cathode 1312. The cell connection pieces 133 may be connected to the positive terminal caps 1315 or the negative terminal caps 1316 of the multiple cell units 131, thereby electrically connecting the multiple cell units 131.

One or more tabs 1314 of the battery are generally designed, limiting the size of the electrical energy conduction path to a certain extent and thus affecting the output characteristics of the battery pack 100, for example, affecting the output power, discharge rate, or overcurrent capability of the battery pack 100.

In the example of the present application, the cell unit 131 is a full-tab battery. As shown in FIG. 8, the tab 1314 of the full-tab battery is configured to be a conductive sheet continuously provided along the entire length direction of the longitudinal extension of the anode 1311 or the cathode 1312. In other examples, the full-tab battery may also be referred to as a tabless battery. The full-tab cell unit or full-tab cell in this example may be understood as the full-tab battery.

In this example, the continuous discharge power of the full-tab cell unit 131 is greater than or equal to 300 W. In other examples, the continuous discharge power of the cell unit 131 is greater than or equal to 350 W, or greater than or equal to 400 W, or greater than or equal to 500 W. In this example, the instantaneous discharge power of the cell unit 131 is greater than or equal to 550 W, or greater than or equal to 600 W, or greater than or equal to 650 W. That is, the full-tab cell unit 131 in the present application can provide greater instantaneous power or continuous discharge power, thereby adapting to the power requirements of different power tools under different working conditions.

Since the full-tab cell units 131 have a stronger discharge capacity, to prevent the heat generated by the cell units 131 from failing to be dissipated in time due to continuous high-current discharge, the minimum distance between the cell units 131 may be set to greater than or equal to 2 mm, or greater than or equal to 2.5 mm, or greater than or equal to 3 mm. In this example, the minimum distance between the cell units 131 may be the minimum distance between adjacent cell units 131 in the horizontal direction or the vertical direction.

In an example, the diameter of the full-tab cell unit 131 is greater than or equal to 3 cm. For example, the diameter of the full-tab cell unit 131 is 3 cm, 3.5 cm, 4 cm, or the like. In an example, the diameter of the full-tab cell unit 131 is greater than or equal to 4 cm. For example, the diameter of the full-tab cell unit 131 may be 4.5 cm, 4.6 cm, 5 cm, or the like. In this example, the height of the full-tab cell unit 131 is greater than or equal to 8 cm. For example, the height of the full-tab cell unit 131 is 8 cm, 9 cm, 10 cm, 11 cm, 12 cm, 13 cm, 13.5 cm, or the like.

By adopting the full-tab cell unit, the ability of the electrodes to transmit electrical energy can be enhanced, while the internal resistance of the cell unit 131 is reduced. For example, the internal resistance of the cell unit 131 is less than or equal to 10 mΩ, or less than or equal to 9 mΩ, or less than or equal to 8 mΩ, or less than or equal to 7 mΩ, or less than or equal to 6 mΩ, or less than or equal to 5 mΩ. In this example, the cell unit 131 may be a 4680 cell. In an example, the energy density of the cell unit 131 is greater than or equal to 600 Wh/L, or greater than or equal to 620 Wh/L, or greater than or equal to 650 Wh/L, or greater than or equal to 660 Wh/L, or greater than or equal to 680 Wh/L, or greater than or equal to 700 Wh/L. In this example, to match the discharge capacity of the cell units 131, the cell connection pieces 133 for connecting the multiple cell units 131 may be partially thickened. In an example, the thickness of the cell connection piece 133 at the connection portion where the cell connection piece 133 is connected to the cell unit 131 is less than the thickness at the non-connection portion. In an example, the ratio of the thickness of the cell connection piece 133 at the connection portion where the cell connection piece 133 is connected to the cell unit 131 to the thickness at the non-connection portion is less than 1, or less than 0.8, or less than 0.6, or less than 0.5. In an example, the cell connection piece 133 may be connected to the cell unit 131 by welding; and the number of welding points is greater than or equal to 2, or continuous soldering without breaks is performed, or the number of welding points is less than or equal to 8, thereby ensuring the overcurrent capability at the connection portion. In an example, to enhance the overcurrent capability of the cell connection piece 133, a reinforcement member 1331 may be disposed on a non-welding surface 133a of the cell connection piece 133 as shown in FIGS. 2C and 2D. The non-welding surface 133a of the cell connection piece 133 may be understood as a surface of the cell connection piece 133 facing away from the cell units 131 to which the cell connection piece 133 is connected. Alternatively, based on the connection between the cell connection piece 133 and the cell units 131, a surface of the cell connection piece 133 directly connected to the cell units 131 is defined as a welding surface 133b, and the other surface which is opposite to the welding surface is defined as the non-welding surface 133a. That is, the non-welding surface 133a of the cell connection piece 133 is not in direct contact or not in contact with the cell units 131 to which the cell connection piece 133 is connected. In the present application, the welding surface 133a and the non-welding surface 133a of the cell connection piece 133 are merely used for distinguishing and defining whether the surface is in direct contact with the connected cell units 131, which does not mean that welding is not performed on the non-welding surface 133a or that welding is performed on the welding surface 133b.

In an example, the reinforcement member 1331 may be a metal member or a metal coating provided on the non-welding surface 133a. For example, the reinforcement member 1331 may be a copper sheet or a copper coating or may be another type of metal sheet or coating. In an example, the reinforcement member 1331 may be provided on the non-welding surface 133a by welding, rolling, composite processes, or other processes.

In an example, the surface shape of the reinforcement member 1331 is different from the surface shape of the cell connection piece 133 as shown in FIG. 2C, and the reinforcement member 1331 may be welded to the non-welding surface 133a of the cell connection piece 133 by electric resistance welding or laser beam welding, thereby forming a cell connection piece assembly with a stronger overcurrent capability and better heat dissipation performance.

In an example, the surface shape of the reinforcement member 1331 is consistent with the surface shape of the cell connection piece 133 as shown in FIG. 2D, that is, the reinforcement member 1331 can be completely attached to the non-welding surface 133a of the cell connection piece 133, thereby forming a cell connection piece assembly with two layers of metal components. In this example, the reinforcement member 1331 may be processed onto the non-welding surface 133a by rolling or other composite processes.

In an example, the thickness of the reinforcement member 1331 is greater than or equal to 0.1 mm and less than or equal to 2 mm. In an example, the thickness of the reinforcement member 1331 is greater than or equal to 0.5 mm and less than or equal to 1 mm. In an example, the thickness of the reinforcement member 1331 is greater than or equal to 0.1 mm and less than or equal to 0.5 mm. For example, the thickness of the reinforcement member 1331 may be 0.1 mm, 0.3 mm, 0.5 mm, 0.8 mm, 1 mm, 1.2 mm, or the like.

In an example, the cell connection piece 133 is made of a material different from that of the reinforcement member 1331. For example, the reinforcement member 1331 is made of copper, while the cell connection piece 133 is made of nickel. Alternatively, the reinforcement member 1331 is made of copper, while the cell connection piece 133 is made of a nickel alloy, such as NB109.

In this example, the contact impedance or welding internal resistance between the cell connection piece 133 and the cell unit 131 is less than or equal to 10 µΩ. Therefore, the temperature rise rate of the battery pack is relatively slow during the charging or discharging process of the battery pack.

In this example, in the case where the battery pack is continuously discharged at a current of 100 A for 30s, the temperature rise of the cell connection pieces 133 is less than or equal to 120°C. Therefore, the cell connection pieces 133 can satisfy the discharging or charging requirements of the full-tab battery.

In this example, to better dissipate heat for the cell units 131, heat dissipation structures 14 are further provided in the battery pack 100. As shown in FIG. 6, the heat dissipation structure 14 may be disposed near the positive terminal cap 1315 or the negative terminal cap 1316 of the cell unit 131 to enhance the heat dissipation capability of the tabs 1314. In this example, the minimum straight-line distance between the heat dissipation structure 14 and the tab 1314 of the anode or cathode is less than or equal to 0.5 cm, or less than or equal to 1 cm, or less than or equal to 1.5 cm. In an example, the heat dissipation structure 14 may include a busbar that can guide the heat dissipated by the cell unit 131. The busbar at the connection portion where the busbar is connected to the tab 1314 is at least partially configured to be a channel with a wavy shape, a serrated shape, or another shape, thereby increasing the discharge paths for hot air. In this example, the heat dissipation structure 14 may include at least one heat dissipation material selected from a nickel strip, copper, and nickel-plated copper. In an example, the heat dissipation structure 14 may be a hydrogel.

In this example, some or all of the cell units 131 of the battery pack 100 are configured to be full-tab batteries, thereby greatly improving the power density of the battery pack 100. In an example, the output power density of the battery pack 100 is greater than or equal to 1500 W/kg, or greater than or equal to 1600 W/kg, or greater than or equal to 1700 W/kg, or greater than or equal to 1800 W/kg, or greater than or equal to 1900 W/kg, or greater than or equal to 2000 W/kg. In this example, the number of full-tab batteries in the battery pack 100 is greater than or equal to 10 or greater than or equal to 15, and the continuous discharge power of any full-tab battery is greater than or equal to 300 W.

Under certain conditions, the battery pack 100 can be quickly charged. For example, when the remaining power of the battery pack 100 is less than or equal to a first threshold, the charge rate of the battery pack 100 is greater than or equal to 4 C and less than or equal to 10 C. The first threshold may be the percentage of the remaining power of the battery pack 100 to the total power of the battery pack. The threshold may be any value between 70% and 90% (inclusive). For example, the threshold may be 70%, 75%, 80%, 85%, 90%, or the like.

In an example, a riding mower may be provided with a power interface that can be connected to at least the battery pack 100 so that the battery pack 100 can supply power to the riding mower. The cell units 131 in the battery pack 100 are full-tab batteries. In this example, the battery pack 100 may also be referred to as a first energy storage device, and the output power density of the energy storage device is greater than or equal to 1500 W/kg. In an optional example, the riding mower may also be provided with a second energy storage device that is different from the first energy storage device, and second cell units in the second energy storage device may not be full-tab batteries. The power density of the second energy storage device is less than the power density of the first energy storage device.

In an example, the mobile power supply 300 can also charge the battery pack 100. When the remaining power of the battery pack 100 is less than or equal to the first threshold, the charge rate of the battery pack 100 is greater than or equal to 4 C and less than or equal to 10 C. The first threshold may be the percentage of the remaining power of the battery pack 100 to the total power of the battery pack. The threshold may be any value between 70% and 90% (inclusive). For example, the threshold may be 70%, 75%, 80%, 85%, 90%, or the like.

In an example, an adapter may be connected to alternating current mains power to charge the battery pack 100. When the remaining power of the battery pack 100 is less than or equal to the first threshold, the charge rate of the battery pack 100 is greater than or equal to 4 C and less than or equal to 10 C. In this example, the adapter can be connected to alternating current mains power to use alternating current power as the power supply for charging the battery pack 100, or the adapter can be connected to another energy storage device to use direct current power as the power supply for charging the battery pack 100.

In this example, the battery pack 100 can supply power to the electrical device at a maximum discharge rate of greater than or equal to 20 C and less than or equal to 50 C, for example, various power tools or the mobile power supply 300. For example, the maximum discharge rate of the battery pack 100 is 20 C, 25 C, 30 C, 35 C, 40 C, 45 C, 50 C, or the like. In this example, the battery pack 100 includes a maximum of seven full-tab batteries, or the battery pack 100 may include a maximum of eight full-tab batteries, or the battery pack 100 may include a maximum of nine full-tab batteries, or the battery pack 100 may include a maximum of ten full-tab batteries, or the like. In some examples, the number of full-tab batteries in the battery pack 100 may be set according to the required rated voltage of the battery pack 100.

In an example, since the full-tab battery has a smaller internal resistance and a stronger overcurrent capability, the voltage drop of the cell unit 131 is smaller during the discharging process of the battery pack 100. For example, when the remaining power of the battery pack 100 is greater than or equal to 50% and the battery pack 100 supplies power to the electrical device at a discharge rate of greater than or equal to 2 C at a preset temperature, the voltage drop of the cell unit 131 is less than or equal to 90 mV, or less than or equal to 100 mV, or less than or equal to 110 mV, or less than or equal to 120 mV. The preset temperature may be room temperature or normal temperature, for example, a temperature of about 20°C, or a temperature of about 25°C, or a temperature of about 30°C. In this example, the preset temperature range may be any temperature or a temperature interval within a temperature range of -20°C to 60°C. In an example, on the basis that the preset temperature and the discharge rate are basically consistent, the greater the remaining power of the battery pack 100 is, the smaller the voltage drop of the cell unit 131 during the discharging process is. For example, when the remaining power of the battery pack 100 is greater than or equal to 70% and the battery pack 100 supplies power to the electrical device at a discharge rate of greater than or equal to 2 C at the preset temperature, the voltage drop of the cell unit 131 is less than or equal to 80 mV or less than or equal to 85 mV.

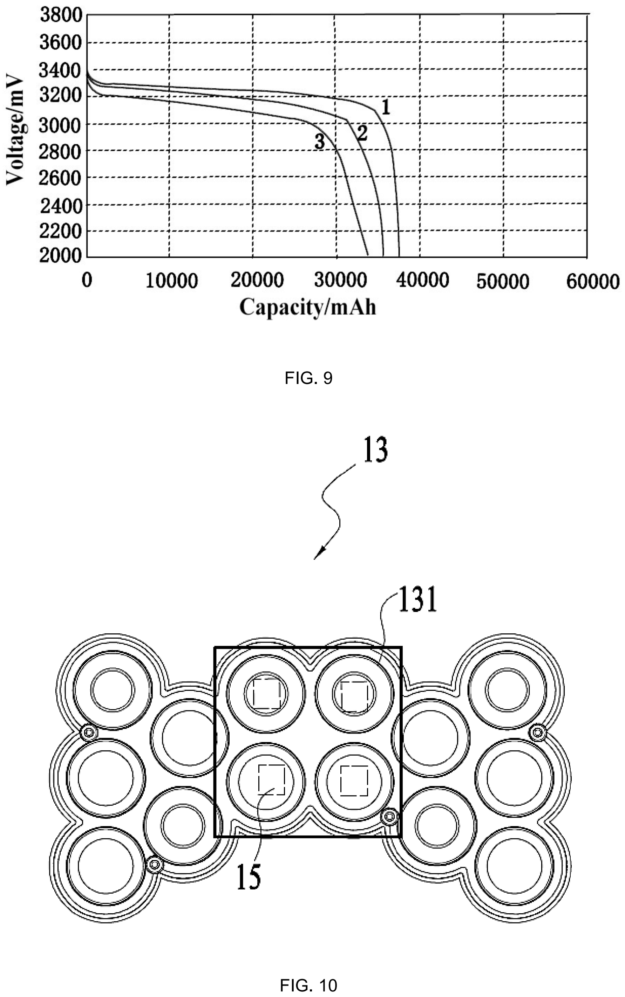

FIG. 9 shows the voltage change process of the cell unit 131 during the discharging process of the battery pack 100. FIG. 9 shows the voltage changes of the cell unit 131 during the discharging process at the preset temperature and a discharge rate of greater than or equal to 2 C when the remaining power of the battery pack 100 is 70%, 50%, and 30%, respectively. Line 1 represents the voltage change of the cell unit 131 during the discharging process of the battery pack 100 with a remaining power of 70%, Line 2 represents the voltage change of the cell unit 131 during the discharging process of the battery pack 100 with a remaining power of 70%, and Line 3 represents the voltage change of the cell unit 131 during the discharging process of the battery pack 100 with a remaining power of 70%. As can be seen from the figure, the more the remaining power of the battery pack 100 is, the smaller the voltage drop of the cell unit 131 during the discharging process is; and during discharging, the voltage drop of the cell unit 131 in the voltage plateau period is less than the voltage drop of the cell unit 131 in the non-voltage plateau period.

In this example, at least one of the multiple cell units 131 in the battery pack 100 is configured to be a test cell, and a temperature detection element 15 is disposed at an end of the test cell to detect the temperature of the test cell. In this example, the temperature of the test cell may basically be considered to be the internal temperature of the battery pack 100, or the temperature of the test cell is basically the temperature of the cell module 13. As shown in FIG. 10, one or more cell units 131 within the rectangular frame may be configured to be test cells, and the test cells are basically located at the geometric center of the cell module 13 or basically located at the center of gravity of the cell module 13. In an example, the test cell is basically consistent with other cell units 131; or the test cell is more sensitive to temperature changes, and the temperature of the test cell is more representative of the temperature inside the battery pack 100. For example, the material in the test cell is more sensitive to temperature changes, and the temperature changes can be more easily detected by the temperature detection element 15.

In this example, the test cell is a full-tab battery, and the temperature detection element 15 can at least detect the temperature of the full-tab battery. Alternatively, the temperature detection unit 15 may also detect the temperature of other full-tab batteries in the battery pack 100. In an example, the temperature detection element 15 may be disposed at an end of the full-tab battery or at any circumferential position of the full-tab battery, or the temperature detection element 15 may be disposed inside the full-tab battery to directly detect the internal temperature of the battery.

The battery pack 100 further includes a battery management unit (not shown) mainly configured to manage the charging/discharging of the battery pack 100. In this example, the temperature detection element 15 may communicate with the battery management unit via a communication line to transmit temperature data to the battery management unit. The temperature data may be the temperature of the test cell or the temperature of any full-tab battery in the battery pack. The battery management unit may determine whether the battery pack 100 is at risk of overheating according to the acquired temperature data, or control the charge/discharge rate of the battery pack according to the temperature, or control the battery pack to start charging/discharging or stop charging/discharging according to the temperature, or estimate the internal core temperature of the cell unit 131 according to the temperature data, or adjust the maximum output power or maximum output current of the battery pack 100 according to the temperature data, or select different charging modes or discharging modes according to the temperature data.

In an example, the temperature detection element 15 may be a temperature measuring resistor, a temperature sensor, a thermocouple, or the like.

In an example, a magnetic current sensor (not shown) is further provided in the battery pack 100 and can at least non-destructively detect or monitor the charge/discharge current of the cell module 13. In an example, the magnetic current sensor can be electrically connected or communicatively connected to the battery management unit and can transmit current data to the battery management module. In this example, the magnetic current sensor may be disposed on the charging/discharging circuit of the cell module 13, for example, at an electrical energy input terminal or an electrical energy output terminal for charging/discharging.

In an example, the weight of the battery pack 100 may be less than or equal to 4 kg, and the battery pack 100 can continuously provide the power tool 200 with a power of greater than or equal to 6 kW so that the handheld power tool 200 can be lightweight while having a stronger discharge capacity, thereby greatly improving the performance of the handheld power tool. In this example, the weight of the battery pack 100 may be less than or equal to 3.5 kg or less than or equal to 3 kg, and the battery pack 100 can continuously output a power of greater than or equal to 6.5 kW or greater than or equal to 7 kW. In other examples, the weight of the battery pack 100 and the continuous output power of the handheld power tool 200 may be any combination of the preceding parameters, such as a weight of less than or equal to 3.4 kg and a continuous output power of greater than or equal to 6 kW. In this example, the handheld power tool 200 may be a handheld garden tool or a home decoration tool, such as a chainsaw.

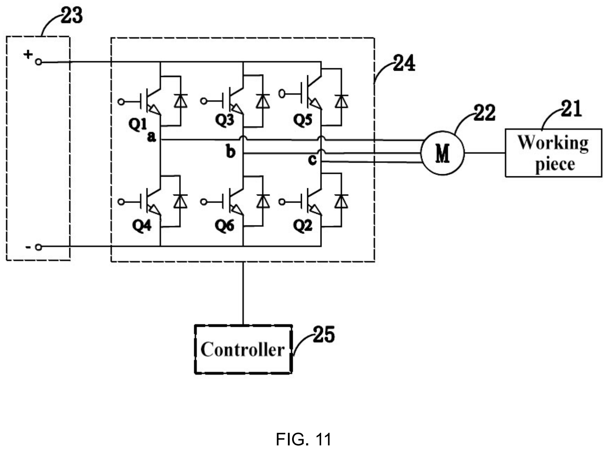

Referring to the control circuit diagram of the power tool 200 shown in FIG. 11, the power tool 200 may further include a working piece 21, an electric motor 22, a battery pack interface 23, a driver circuit 24, and a controller 25. Different types of power tools 200 have different working pieces 21. For example, the working piece of a mower is a mowing blade, while the working piece of a handheld electric drill is a drill bit. The electric motor 22 may be a brushed electric motor or a brushless electric motor. In an example, the electric motor 22 may be a wheel hub motor. The type of the electric motor 22 is not limited in the present application. The battery pack interface 23 can be connected to at least the battery pack 100 including full-tab batteries. In this example, the electric motor 22 includes a stator core and windings, and the slot fill factor of the windings is greater than or equal to 40%, or greater than or equal to 45%, or greater than or equal to 50%. In an example, the electric motor 22 may be a flat wire motor. In the case where the electric motor is powered by the full-tab batteries, after the slot fill factor of the electric motor is optimized and the type of the electric motor is changed, the output power of the electric motor 22 is greater than or equal to 0 and less than or equal to 10 kW.

The driver circuit 24 has output terminals electrically connected to the stator windings of the electric motor 22 and is used for transmitting the current received from the battery pack interface 23 to the stator windings A, B, and C to drive the electric motor 22 to rotate. In an example, the driver circuit 24 includes multiple switching elements Q1, Q2, Q3, Q4, Q5, and Q6. A gate terminal of each switching element is electrically connected to the controller 25 and is used for receiving a control signal from the controller 25. A drain or source of each switching element is connected to the stator winding A, B, or C of the electric motor 22. The switching elements Q1 to Q6 receive control signals from the controller 25 to change their respective on states, thereby changing the current loaded to the stator windings of the electric motor 22 by the power supply. In an example, the driver circuit 24 may be a three-phase bridge driver circuit including six controllable semiconductor power devices (such as field-effect transistors (FETs), bipolar junction transistors (BJTs), or insulated-gate bipolar transistors (IGBTs)). It is to be understood that the preceding semiconductor switches may be any other types of solid-state switches such as the IGBTs or the BJTs. In this example, the semiconductor switches include at least gallium nitride (GaN). The resistance of the semiconductor switch is less than or equal to 2 mΩ, for example, 1 mΩ or 2 mΩ.

As shown in FIG. 10, to drive the electric motor 22 to rotate, the driver circuit 24 has multiple driving states, and in different driving states, the electric motor 22 may have different rotational speeds or different rotational directions. In the present application, the process is not described in detail in which the controller 25 controls the driver circuit 24 to change different driving states such that the electric motor 22 has different rotational speeds or different rotational directions.

In this example, the battery pack interface 23 can be connected to a first battery pack and a second battery pack. Some or all of the multiple cell units in the first battery pack are full-tab batteries, and the multiple cell units in the second battery pack are not full-tab batteries. The first battery pack may be referred to as a full-tab battery pack, and the second battery pack may be referred to as a common battery pack. In this example, the number of cell units in the first battery pack is basically the same as the number of cell units in the second battery pack, and the volume of the first battery pack is basically the same as the volume of the second battery pack.

The controller 25 can identify the type of the battery connected to the battery pack interface 23 and then set the overcurrent protection threshold for the power tool 200 to respond to overcurrent protection according to the connected battery pack. In an example, when identifying that the first battery pack is connected to the battery pack interface 23, the controller 25 may set the overcurrent protection threshold of the power tool 200 to a first threshold; and when identifying that the second battery pack is connected to the battery pack interface 23, the controller 25 may set the overcurrent protection threshold of the power tool 200 to a second threshold. The first threshold is greater than or equal to twice the second threshold, that is, the ratio of the first threshold to the second threshold is greater than or equal to 2. In other examples, the ratio of the first threshold to the second threshold is greater than or equal to 2.5, or greater than or equal to 3, or greater than or equal to 3.5.

In an example, the controller 25 may set the power tool 200 such that the overcurrent protection response time of the power tool 200 varies depending on the connected battery pack. The overcurrent protection response time may be understood as the period from when the controller 25 detects that the operating current of the electric motor 22 is greater than the overcurrent protection threshold to when the overcurrent protection instruction is outputted, or the period from when the controller 25 detects that the operating current of the electric motor 22 is greater than the overcurrent protection threshold to when overcurrent protection measures are performed, or the period from when the controller 25 receives the overcurrent protection instruction to when the controller 25 executes the instruction. In an example, when identifying that the battery pack interface 23 is connected to the first battery pack, the controller 25 sets the overcurrent protection response time to the first duration; and when identifying that the battery pack interface 23 is connected to the second battery pack, the controller 25 sets the overcurrent protection response time to the second duration. The first duration is greater than the second duration.

With continued reference to FIG. 10, the controller 25 may control the electric motor 22 to brake or decelerate. During the braking or deceleration process of the electric motor, a regenerative current may be generated, and the regenerative current can charge the energy storage device connected to the battery pack interface 23. How the regenerative current is generated during the braking or deceleration process of the electric motor 22 is not described in detail in this example. The energy storage device capable of receiving the regenerative current may be the battery pack 100 including full-tab batteries. In this example, the maximum regenerative current that each cell unit 131 in the battery pack 100 can withstand is greater than or equal to 10 A, or greater than or equal to 15 A, or greater than or equal to 20 A.

The technical features included in the various examples of the present application may be combined with each other to form new examples, which will not be enumerated herein.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A battery pack for supplying power to a power tool, comprising:
a housing;
a power tool interface configured to be connected to the power tool, wherein the power tool interface comprises a terminal assembly; and
a cell module accommodated in the housing and electrically connected to the terminal assembly, wherein the cell module comprises at least a plurality of cell units;
wherein continuous discharge power of a cell unit of the plurality of cell units is greater than or equal to 300 W.

2. The battery pack of claim 1, wherein instantaneous discharge power of the cell unit is greater than or equal to 550 W.

3. The battery pack of claim 1, wherein power density of the battery pack is greater than or equal to 1500 W/kg.

4. The battery pack of claim 1, wherein the plurality of cell units are full-tab batteries.

5. The battery pack of claim 1, wherein the terminal assembly comprises a first positive terminal, a second positive terminal, a negative terminal, and a communication terminal.

6. The battery pack of claim 1, wherein the battery pack is further configured to be detachably mounted to a riding vehicle to supply power to the riding vehicle.

7. The battery pack of claim 1, wherein the battery pack is further configured to be detachably mounted to a mobile power supply to supply power to at least the mobile power supply.

8. The battery pack of claim 1, wherein a minimum distance between every two adjacent cell units in the plurality of cell units is greater than or equal to 2 mm.

9. A battery pack for supplying power to a power tool, comprising:
a housing;
a power tool interface configured to be connected to the power tool, wherein the power tool interface comprises a terminal assembly; and
a cell module accommodated in the housing and electrically connected to the terminal assembly, wherein the cell module comprises at least one cell unit;
wherein a maximum discharge rate of the battery pack is greater than or equal to 20 C and less than or equal to 50 C.

10. The battery pack of claim 9, wherein the at least one cell unit is a full-tab battery.

11. The battery pack of claim 9, wherein resistance of the at least one cell unit is less than or equal to 10 mΩ.

12. The battery pack of claim 9, wherein energy density of the at least one cell unit is greater than or equal to 600 Wh/L.

13. The battery pack of claim 9, wherein a charge rate of the battery pack is greater than or equal to 4 C and less than or equal to 10 C.

14. A battery pack, comprising:
a housing;
an interface configured to be connected to an electrical device, wherein the interface comprises a terminal assembly; and
a cell module accommodated in the housing and electrically connected to the terminal assembly, wherein the cell module comprises a plurality of cell units;
wherein when remaining power of the battery pack is greater than or equal to 50% and
the battery pack supplies power to the electrical device at a discharge rate of greater than or equal to 2 C at a preset temperature, a voltage drop of a cell unit of the plurality of cell units is less than or equal to 100 mV.

15. The battery pack of claim 14, wherein the plurality of cell units are cylindrical batteries.

16. The battery pack of claim 14, wherein the plurality of cell units are full-tab batteries.

17. The battery pack of claim 14, wherein power density of the battery pack is greater than or equal to 1500 W/kg.

18. The battery pack of claim 16, wherein the preset temperature ranges from -20 °C to 60 °C.

19. A handheld power tool, comprising:
a housing;
a working piece;
an electric motor disposed in the housing and configured to drive the working piece; and
a battery pack detachably mounted to the housing and configured to supply power to the electric motor;
wherein weight of the battery pack is less than or equal to 4 kg, and the battery pack is capable of continuously providing the electric motor with a power of greater than or equal to 6 kW.

20. The power tool of claim 19, wherein the battery pack comprises a plurality of cell units, and at least one cell unit of the plurality of cell units is a full-tab battery.

21. The power tool of claim 19, wherein the handheld power tool is a garden tool.

22. The power tool of claim 19, wherein the handheld power tool is a chainsaw.

23. The power tool of claim 20, wherein the plurality of cell units are cylindrical batteries.

24. The power tool of claim 20, wherein resistance of the at least one cell unit is less than or equal to 10 mΩ.

25. A battery pack, comprising:
a housing;
an interface configured to be detachably connected to an electrical device or a charging device, wherein the interface comprises a terminal assembly; and
a cell module accommodated in the housing and electrically connected to the terminal assembly, wherein the cell module comprises a plurality of cylindrical cell units;
wherein when the interface is electrically connected to the charging device and a battery level of the battery pack is less than or equal to a first threshold, a charge rate of the battery pack is greater than or equal to 4 C and less than or equal to 10 C.

26. The battery pack of claim 25, wherein the electrical device comprises a riding mower.

27. The battery pack of claim 25, wherein the electrical device or the charging device comprises a mobile power supply.

28. The battery pack of claim 25, wherein continuous discharge power of a cell unit of the plurality of cylindrical cell units is greater than or equal to 300 W.

29. The battery pack of claim 25, wherein power density of the battery pack is greater than or equal to 1500 W/kg.

30. The battery pack of claim 25, wherein the first threshold is greater than or equal to 70% and less than or equal to 90%.

31. The battery pack of claim 25, wherein the battery pack comprises at least ten cell units, and the at least ten cell units are full-tab batteries.

32. The battery pack of claim 25, wherein the plurality of cylindrical cell units are full-tab batteries.

33. The battery pack of claim 25, wherein the interface is configured to be connectable to an adapter, and the adapter is connectable to alternating current power or direct current power as a charging power supply.

34. A battery pack, comprising:
a housing; and
a cell module accommodated in the housing, wherein the cell module comprises a plurality of cell units, and the plurality of cell units comprise at least one full-tab battery;
wherein the battery pack further comprises:
a first interface configured to be connected to at least an electrical device, wherein the first interface comprises a first terminal assembly; and
a second interface configured to be connected to at least a charging device, wherein the second interface comprises a second terminal assembly;
wherein at least some components of the first terminal assembly and the second terminal assembly are different.

35. The battery pack of claim 34, wherein the plurality of cell units are cylindrical batteries.

36. The battery pack of claim 34, wherein the electrical device comprises a garden tool or a handheld tool.

37. The battery pack of claim 34, wherein the charging device comprises a charger or an adapter.

38. The battery pack of claim 34, wherein resistance of at least one cell unit of the plurality of cell units is less than or equal to 10 mΩ.

39. The battery pack of claim 34, wherein energy density of at least one cell unit of the plurality of cell units is greater than or equal to 600 Wh/L.

40. The battery pack of claim 34, wherein a charge rate of the battery pack is greater than or equal to 3 C and less than or equal to 10 C.

41. The battery pack of claim 34, wherein the first terminal assembly comprises a first positive terminal, a negative terminal, and a communication terminal; and the second terminal assembly comprises a second positive terminal, the negative terminal, and the communication terminal.

42. A battery pack, comprising:
a housing;
a terminal assembly disposed in the housing; and
a plurality of cell units disposed in the housing, wherein each of the plurality of cell units comprises a positive electrode tab and a negative electrode tab;
wherein the positive electrode tab or the negative electrode tab has a full-tab structure; and
heat dissipation structures are further disposed in the housing, and a minimum distance between the positive electrode tab or the negative electrode tab and a heat dissipation structure of the heat dissipation structures in an axial direction of a cell unit of the plurality of cell units is less than or equal to 1 cm.

43. The battery pack of claim 42, wherein the heat dissipation structure comprises a busbar.

44. The battery pack of claim 42, wherein the heat dissipation structure comprises at least one heat dissipation material selected from a nickel strip, copper, and nickel-plated copper.

45. The battery pack of claim 42, wherein the heat dissipation structure comprises a heat dissipation channel, and an inlet of the heat dissipation channel faces at least one end surface of the cell unit.

46. The battery pack of claim 42, wherein the heat dissipation structure comprises a hydrogel.

47. A power tool, comprising:
a housing;
a working piece;
an electric motor disposed in the housing and configured to drive the working piece; and
an energy storage device configured to be capable of supplying power to the electric motor and comprising a plurality of cell units;
wherein the energy storage device is configured to be capable of receiving and storing a regenerative current, wherein a maximum regenerative current of each of the plurality of cell units is greater than or equal to 10 A.

48. The power tool of claim 47, wherein the plurality of cell units are full-tab batteries.

49. The power tool of claim 47, wherein internal resistance of a cell unit of the plurality of cell units is less than or equal to 10 mΩ.

50. The power tool of claim 47, wherein the energy storage device is disposed inside the housing.

51. The power tool of claim 47, wherein the energy storage device is detachably mounted on an outer side of the housing.

52. A power tool, comprising:
a housing;
a working piece;
an electric motor disposed in the housing and configured to drive the working piece;
a battery pack interface disposed on the housing and used for detachably mounting a battery pack, wherein the battery pack interface transmits electrical energy from the battery pack to supply power to the electric motor;
a driver circuit configured to drive the electric motor to rotate; and
a controller configured to control the driver circuit;
wherein the controller is further configured to:
when identifying that the battery pack interface is connected to a first battery pack, set an overcurrent protection threshold of the power tool to a first threshold; and
when identifying that the battery pack interface is connected to a second battery pack, set the overcurrent protection threshold of the power tool to a second threshold;
wherein the first threshold is greater than or equal to twice the second threshold, and volumes of the first battery pack and the second battery pack are the same within a preset volume floating range.

53. The power tool of claim 52, wherein the first battery pack comprises a plurality of cell units, and the plurality of cell units are full-tab batteries.

54. The power tool of claim 52, wherein the controller is further configured to: when identifying that the battery pack interface is connected to the first battery pack, set overcurrent protection response time to a first duration; and when identifying that the battery pack interface is connected to the second battery pack, set the overcurrent protection response time to a second duration; wherein the first duration is greater than the second duration.

55. The power tool of claim 52, wherein a number of cell units in the first battery pack is basically the same as a number of cell units in the second battery pack.

56. A battery pack, comprising:
a housing;
a terminal assembly disposed in the housing; and
a cell module accommodated in the housing and electrically connected to the terminal assembly, wherein the cell module comprises a plurality of cylindrical cell units;
wherein at least one of the plurality of cylindrical cell units is a test cell;
wherein a temperature detection element is disposed at an end of the test cell and configured to detect temperature of a tab of the test cell.

57. The battery pack of claim 56, wherein the test cell is located basically at a center of gravity of the cell module.

58. The battery pack of claim 56, further comprising a battery management unit, wherein the battery management unit communicates with the temperature detection element via a communication line.

59. The battery pack of claim 56, wherein the test cell is a full-tab battery.

60. The battery pack of claim 56, wherein the temperature detection element comprises at least a temperature sensor.

61. A battery pack, comprising:
a housing;
a terminal assembly disposed in the housing;
a cell module accommodated in the housing and electrically connected to the terminal assembly, wherein the cell module comprises a plurality of cell units, and the plurality of cell units comprise at least one full-tab battery;
a temperature detection element configured to acquire temperature of a full-tab battery of the at least one full-tab battery; and
a battery management unit disposed in the housing and communicatively connected to the temperature detection element;
wherein the battery management unit is configured to:
adjust maximum output power or a maximum output current of the battery pack according to the temperature.

62. The battery pack of claim 61, wherein the temperature detection element is configured to directly detect the temperature of the full-tab battery.

63. The battery pack of claim 61, wherein the temperature detection element is configured to detect ambient temperature within the battery pack and estimate the temperature of the full-tab battery according to the ambient temperature.

64. The battery pack of claim 61, wherein the battery management unit is further configured to select a charging mode of the battery pack according to the temperature.

65. The battery pack of claim 61, wherein the battery pack is suitable for supplying power to a riding vehicle.

66. The battery pack of claim 61, wherein the battery pack is suitable for supplying power to a power tool.

67. A power tool, comprising:
a housing;
a working piece;
an electric motor disposed in the housing and configured to drive the working piece;
an energy storage device mounted to the housing, wherein the energy storage device comprises a plurality of cell units for supplying power to the electric motor; and
a driver circuit disposed in the housing and configured to drive the electric motor, wherein the driver circuit comprises a plurality of semiconductor switches;
wherein the plurality of cell units are full-tab batteries, and resistance of a semiconductor switch of the plurality of semiconductor switches is less than or equal to 2 mΩ.

68. The power tool of claim 67, wherein the electric motor comprises a stator core and windings, and a slot fill factor of the windings is greater than or equal to 40%.

69. The power tool of claim 67, wherein the electric motor is a flat wire motor.

70. The power tool of claim 67, wherein the semiconductor switch comprises gallium nitride.

71. The power tool of claim 67, wherein power of the electric motor is greater than or equal to 0 and less than or equal to 10 kW.

72. The power tool of claim 67, wherein the energy storage device is disposed inside the housing.

73. The power tool of claim 67, wherein the energy storage device is detachably mounted on an outer side of the housing.

74. A battery pack for supplying power to a power tool, comprising:
a housing;
a power tool interface configured to be connected to the power tool, wherein the power tool interface comprises a terminal assembly;
a cell module accommodated in the housing and electrically connected to the terminal assembly, wherein the cell module comprises a plurality of cell units, and the plurality of cell units comprise at least one full-tab battery; and
a magnetic current sensor configured to detect a current of the cell module, wherein the magnetic current sensor is disposed in the housing.

75. The battery pack of claim 74, wherein the terminal assembly comprises a first positive terminal, a second positive terminal, a negative terminal, and a communication terminal.

76. The battery pack of claim 74, further comprising cell connection pieces for connecting the plurality of cell units, wherein a cell connection piece of the cell connection pieces has an uneven thickness.

77. The battery pack of claim 76, wherein a thickness of a welded portion of the cell connection piece is less than a thickness of a non-welded portion of the cell connection piece.

78. The battery pack of claim 76, wherein the magnetic current sensor is disposed on a charging/discharging circuit of the cell module.

79. A battery pack for supplying power to a power tool, comprising:
a housing;
a power tool interface for connecting the power tool;
a cell module accommodated in the housing, wherein the cell module comprises a plurality of cell units; and
cell connection pieces for connecting at least two of the plurality of cell units;
in a case where the battery pack continuously supplies power to the power tool at a current of 100 A for at least 30s, a temperature rise of the cell connection pieces is less than or equal to 120°C.

80. The battery pack of claim 79, wherein a reinforcement member is disposed on a non-welding surface of a cell connection piece of the cell connection pieces.

81. The battery pack of claim 80, wherein the reinforcement member comprises a metal sheet or a metal coating.

82. The battery pack of claim 80, wherein the reinforcement member comprises a copper sheet or a copper coating.

83. The battery pack of claim 80, wherein a thickness of the reinforcement member is greater than or equal to 0.1 mm and less than or equal to 2 mm.

84. The battery pack of claim 80, wherein a thickness of the reinforcement member is greater than or equal to 0.2 mm and less than or equal to 1 mm.

85. The battery pack of claim 79, wherein a number of welding points between a cell connection piece of the cell connection pieces and a cell unit of the plurality of cell units is greater than or equal to 4 and less than or equal to 8.

86. The battery pack of claim 80, wherein a surface shape of the reinforcement member is different from a surface shape of the cell connection piece.

87. The battery pack of claim 80, wherein a surface shape of the reinforcement member is consistent with a surface shape of the cell connection piece.

88. The battery pack of claim 80, wherein the reinforcement member is disposed on the cell connection piece by at least one of welding, rolling, or composite processes.

89. The battery pack of claim 80, wherein the reinforcement member is made of a material different from a material of the cell connection piece.

90. A battery pack, comprising:
a housing;
a cell module accommodated in the housing, wherein the cell module comprises a plurality of cell units; and
cell connection pieces for connecting at least two of the plurality of cell units;
wherein contact impedance between a cell connection piece of the cell connection pieces and a cell unit of the plurality of cell units is less than or equal to 10 µΩ.

91. The battery pack of claim 90, wherein a reinforcement member is disposed on a non-welding surface of the cell connection piece.
